# EUROPÄISCHE PATENTSCHRIFT

(11) **EP 2 669 222 B1**
(45) Veröffentlichungstag und Bekanntmachung des Hinweises auf die Patenterteilung: **09.05.2018**
(21) Anmeldenummer: 13002800.4
(22) Anmeldetag: 29.05.2013
(51) Int. Cl.: B65G 53/42, B65G 65/36

(54) **Schüttgutlager und Entnahmevorrichtung für ein Schüttgutlager**
Bulk retrieval device and storage facility with such a device
Dispositif d'extraction de matériau en vrac et installation de stockage avec un tel dispositif

(30) Priorität: 29.05.2012 DE 202012005188 U
(43) Veröffentlichungstag der Anmeldung: 04.12.2013
(73) Patentinhaber: Schellinger, Helmut, 88250 Weingarten (DE)
(72) Erfinder: Schellinger, Helmut, 88250 Weingarten (DE)
(74) Vertreter: Otten, Roth, Dobler & Partner mbB Patentanwälte

(56) Entgegenhaltungen:
- DE-A1- 2 528 483
- FR-A1- 2 182 603
- JP-U- S59 173 631
- NL-A- 7 000 515
- NL-A- 7 908 397

## Beschreibung

Die Erfindung betrifft eine Entnahmevorrichtung nach dem Oberbegriff des Anspruchs 1 und ein Lager mit einer solchen Entnahmevorrichtung.

### Stand der Technik:

Lager für Schüttgut bzw. körnige Feststoffe wie Granulate oder Pellets mit einem zum Beispiel im Wesentlichen abgeschlossenen Lagerraum und gattungsgemäße Entnahmevorrichtungen zum selbsttätigen Entnehmen des Schüttguts aus dem Lager sind z.B. aus der NL7908397A, der DE2528483A1, der NL700515A, der JPS59173631U oder der FR2182603A bekannt.

Diese weisen einen Entnahmekopf und Verfahrmittel zum Bewegen des Entnahmekopfs im Lager auf.

Beispielsweise sind solche Anordnungen für Lager von Holzpellets für Pelletheizungen im Praxiseinsatz bekannt.

### Aufgabe und Vorteile der Erfindung:

Aufgabe der Erfindung ist es eine Entnahmevorrichtung für ein Schüttgutlager bzw. ein Lager für Schüttgut zu verbessern, insbesondere im Hinblick auf eine sichere und komfortable Betriebsführung.

Diese Aufgabe wird durch die Entnahmevorrichtung nach Anspruch 1 und das Lager nach Anspruch 13 gelöst.

In den abhängigen Ansprüchen sind vorteilhafte und zweckmäßige Weiterbildungen der Erfindung dargelegt.

Die Erfindung geht zunächst aus von einer Entnahmevorrichtung für ein Lager für Schüttgut, insbesondere für ein Holzpelletlager, mit einem Entnahmekopf und Verfahrmittel zum Bewegen des Entnahmekopfs. Der Entnahmekopf dient insbesondere dazu, im Lager von einer Entnahmestelle das dort vorhandene Schüttgut aufzunehmen und leitungsgebunden aus dem Lager heraus an einen gewünschten Zielort z. B. einen Einsatzort des Schüttgutes wie zum Beispiel einen Brenner einer Heizanlage zu transportieren. Der Schüttgut-Einsatzort liegt in der Regel außerhalb bzw. entfernt des Lagers. Mit dem Entnahmekopf ist in der Regel eine Fördereinrichtung für das Schüttgut mit beispielsweise einem Saugaggregat wie einem Vakuum- oder Unterdruckförderer und einem Saugrohr verbunden. Die Entnahmevorrichtung umfasst mehrere unabhängig antreibbare und ansteuerbare Antriebselemente zum Bewegen des Entnahmekopfs vorgesehen sind. Gegebenenfalls können bereits zwei entsprechend ausgebildete Antriebselemente zur sicheren Bewegung des Entnahmekopfes ausreichen. Für eine besonders präzise Bewegung bzw. eine flexible Bewegungsausübung des Entnahmekopfs ist es vorteilhaft, dass genau drei Antriebselemente für wenigstens drei vorgebbare Richtungen der Bewegung des Entnahmekopfes relativ zum Haufwerk vorhanden sind. Bevorzugt sind die drei Antriebselemente gleichartig ausgebildet. Mit den genau drei separaten und jeweils einzeln antreibbaren und ansteuerbaren Antriebselementen kann die Bewegung des Entnahmekopfes vorteilhaft in eine Vielzahl von vorgebbaren unterschiedlichen Richtungen bzw. in nahezu jede Richtung realisiert werden. Der Entnahmekopf kann durch dessen erfindungsgemäße Antriebsanordnung zum Beispiel entlang der Oberfläche des Haufwerks oder in dem Schüttgutmaterial zuverlässig in jede gewünschte Raumrichtung bewegt werden.

Insbesondere kann der Entnahmekopf innerhalb des Lagers angetrieben an sämtliche Stellen im vom Schüttgut bzw. Haufwerk eingenommenen Volumen im Lager gelangen.

Vorteilhafterweise kann sich der Entnahmekopf gezielt oder zufällig über das bzw. im Schüttgutmaterial bewegen.

Insbesondere lässt sich vorteilhaft eine aktive Entnahmetechnik für ein Schüttgutlager realisieren. Dabei wird das Schüttgutmaterial vergleichsweise gering beansprucht, da das Material nach der Einfüllung in das Lager über die gesamte Lagerzeit nahezu bewegungs- und reibungsfrei ruht. Andernfalls bei passiven Systemen kann zum Beispiel durch Nachrutschbewegungen des Schüttgutmaterials, wenn das Material z. B. in der Trichterspitze eines sich bildenden Trichters im Haufwerk abgesaugt wird, das Schüttgut negativ verändert werden. Zum Beispiel können durch das Nachrutschen unerwünschte Begleiterscheinungen wie verstärkte Staubbildung bzw. höhere Feinanteile auftreten. Bei dem erfindungsgemäßen aktiven Entnahmesystem wird nicht wie bei passiven Systemen das Schüttgutmaterial zum im wesentlichen ortsfesten Entnahmekopf bewegt, sondern der sich aktiv bewegende Entnahmekopf nimmt das Material "abgrasend" und damit schonend auf, ohne dass Nachrutschschrägen am Schüttgut entstehen.

Mit den mehreren unabhängig wirkenden Antriebselementen ist es zudem möglich; neben der Vermittlung der Bewegung des Entnahmekopfes die Dosierung des Schüttgutes in z. B. ein anschließendes Saugrohr zu beeinflussen, so dass dadurch beispielsweise die Fördermenge pro Zeiteinheit in einem begrenzten Maß beeinflusst werden kann.

Mit den Antriebselementen ist gegebenenfalls eine kontrollierte Dosierung von Schüttgut in ein Saugrohr am Entnahmekopf einstellbar. Beispielsweise kann eine ausreichend schnelle Bewegung des Entnahmekopfes mit einer erhöhten Fördermenge von Schüttgut pro Zeiteinheit verknüpft sein.

Die Steuerung der einzelnen Antriebselemente erfolgt über eine übergeordnete Steuereinheit wie eine Rechner- bzw. Computereinheit.

Die Steuerung wirkt insbesondere auf Antriebseinheiten zum Antrieb der Antriebselemente.

Die Antriebsbewegung der Antriebselemente ist vorteilhaft rotierend bzw. rotatorisch. Eine andere Antriebsbewegung der Antriebselemente ist jedoch nicht ausgeschlossen, beispielsweise eine Schwenkbewegung, eine hin- und hergehende bzw. lineare Antriebsbewegung oder eine Überlagerung verschiedener Bewegungstypen.

Weiter ist es vorteilhaft, dass eine Drehrichtung der Antriebselemente änderbar ist. Die Möglichkeit einer Bewegungsrichtungsumkehr gilt natürlich auch für den Fall, dass eine nicht rotierende Bewegung der Antriebselemente eingerichtet ist. Für drehend angetriebene Antriebselemente ist es vorteilhaft, dass sich insbesondere z. B. die Drehzahl und/oder die Drehrichtung bzw. auch ein Stillstand der Antriebselemente insbesondere individuell für jedes Antriebselement vorgeben lässt. Damit sind rechtsdrehende Antriebselemente und linksdrehende Antriebselemente am Entnahmekopf realisierbar. Dabei können die mehreren Antriebselemente in einer Betriebsphase alle in die gleiche Richtung rotieren, zum Beispiel wenn alle gemeinsam den gleichen Antriebszustand einnehmen oder die jeweiligen Antriebelemente rotieren alternierend links- und rechtsherum bzw. gleichzeitig zumindest phasenweise in unterschiedlichen Richtungen. Entsprechendes gilt für die jeweilige Drehzahl der Antriebselemente.

Weiter ist es vorteilhaft, dass die Antriebselemente sich unterscheidende Drehachsen aufweisen. Bei zum Beispiel rotierenden Antriebselementen mit drei unabhängigen Drehachsen lassen sich mindestens drei Bewegungsrichtungen des Entnahmekopfes verwirklichen. Beispielsweise können die Drehachsen stern- oder dreiecksförmig angeordnet sein. Damit kann eine Bewegung des Entnahmekopfes auf der zugänglichen bzw. freien Oberfläche des Haufwerks erfolgen. Auch ist es möglich, dass sich der Entnahmekopf in das Haufwerk ein- oder ausgraben kann bzw. eine dreidimensionale Bewegung innerhalb des Haufwerkvolumens vollziehen kann. Vorzugsweise sind die Drehachsen in einer Ebene angeordnet. Die Ebene, in welcher die Drehachsen angeordnet sind lässt sich so definieren, dass sie die Bewegungsebene der Entnahmevorrichtung vorgibt bzw. darstellt, wenn sich die Entnahmevorrichtung auf ebenen Untergrund bewegt. Die Drehachsen können jedoch auch räumlich nahezu beliebig orientiert sein insbesondere zueinander leicht zu der oben definierten Ebene oder zu einer anderen Bezugsebene geneigt sein. Die sich unterscheidenden Drehachsen können gegebenenfalls verschränkt zueinander angeordnet sein.

Vorzugsweise ist die Anordnung der Drehachsen derart, dass der Entnahmekopf eine Kurve oder einen Polygonzug abfahren kann. Denkbar zur Erzeugung einer Kurvenbewegung des Entnahmekopfs ist der Einsatz eines ruderähnlichen Elements, das je nach Ausrichtung den Entnahmekopf in eine Kurve zwingt. Zur Bewegung des Entnahmekopfs auf einer Kurve könnte auch eine Art Bremselement eingesetzt werden, das am Entnahmekopf angeordnet ist und je nach Betätigung eine Richtungsänderung, insbesondere auf eine Kurvenbahn für den Entnahmekopf bereitstellt. Eine andere Möglichkeit für eine gekurvte Bahn polygonal oder stetig besteht darin, die einzelnen Antriebselemente in einer vorgegebenen Art anzusteuern, insbesondere mit unterschiedlichen Geschwindigkeiten arbeiten, z. B. drehen zu lassen bzw. unterschiedlich zu takten, das heißt, unterschiedlich zu- und abzuschalten. Beispielsweise läuft zeitweise nur ein Antrieb oder zwei Antriebe, bei insgesamt z. B. drei Antrieben. All diese Maßnahmen lassen sich einzeln oder in Kombination einsetzen.

In einer überdies bevorzugten Ausführungsform der Erfindung sind die Antriebselemente dazu ausgelegt, Richtungsänderungen, insbesondere beliebige Richtungsänderungen des Entnahmekopfs vornehmen zu können.

In einer vorteilhaften Modifikation der Erfindung besitzt jedes Antriebselement einen eigenen Antrieb. Insbesondere kann ein elektrischer Antrieb beispielsweise ein Elektromotor für das jeweilige Antriebselement vorgesehen sein. Damit lässt sich die variable Ansteuerung und Antreibbarkeit der Antriebselemente vorteilhaft realisieren.

Es ist über dies vorteilhaft, dass die Antriebselemente wenigstens eine längliche Antriebswalze umfassen. Bevorzugt sind mehrere rotierend antreibbare Antriebswalzen mit in einer horizontalen Ebene angeordneten Drehachsen vorgesehen. Bevorzugt sind die Antriebswalzen in Form und Dimension abgestimmt auf die Struktur bzw. die Rheologie des Schüttgutes ausgebildet. Bei bestimmungsgemäß angetriebener Rotation der Antriebswalzen erfährt der Entnahmekopf eine Bewegung mit einer vorgebbaren Richtung bzw. mit einer gewünschten Auftriebs- oder Abtriebswirkung relativ zum Haufwerk.

Anstelle der Walzenform können auch der Walzenform ähnliche oder daraus abgeleitete Formen verwendet werden bzw. beispielsweise eine Kugel- oder Zigarrenform gewählt werden.

Vorzugsweise besitzt jede Antriebswalze außen eine Struktur zur Kraftübertragung auf eine Oberfläche eines Haufwerks, auf welcher sich die Walze bewegen soll. Vorteilhaft kann mit der Struktur auch ein Eingraben des Entnahmekopfes in das Haufwerk möglich gemacht werden bzw. der Entnahmekopf sich wieder ausgraben.

Die Antriebswalze eines Antriebselements kann z. B. zu einer zylindrischen Außenseite der Walze eine vorstehende und/oder eine vertieft ausgebildete Struktur aufweisen und beispielsweise eine Rippung, oder einzelne vorstehende längliche, flächige oder stabförmige bzw. flexible oder starre Elemente aufweisen, wie Bürsten- oder Stabelemente oder ähnliches. Es ist dabei darauf zu achten, dass die Oberflächenstruktur der Antriebswalze auf die Art und Form des Materials abgestimmt ist, welches das Schüttgut bildet.

Auch ist es vorteilhaft, dass eine Saugvorrichtung vorgesehen ist, die in Bezug auf den Entnahmekopf selbst zur Regulierung einer Saugleistung bewegbar ausgestaltet ist. Zum Beispiel ist die Saugvorrichtung in Abhängigkeit von der Bewegungsrichtung und/oder -geschwindigkeit des Entnahmekopfs am Entnahmekopf bewegbar. Die Saugvorrichtung ist vorzugsweise in einem mittigen Bereich bzw. im Bereich des Zentrums des Saugkopfs, z. B. im Bereich des Schwerpunkts des Saugkopfs angeordnet.

Grundsätzlich ist es von Vorteil, wenn Sensormittel vorgesehen sind, welche abhängig vom Betrieb des arbeitenden Entnahmekopfes Informationen erfassen und der Steuerung bereitstellen, wobei die Informationen insbesondere herangezogen werden, um den Betrieb des Entnahmekopfes gezielt zu steuern.

Der Kern der Erfindung liegt darin, dass ein Neigungsmesser am Entnahmekopf vorgesehen ist. Eine Neigungssensorik ist insbesondere im Bereich des von den Antriebselementen bewegten Entnahmekopfs vorteilhaft, da ein Haufwerk regelmäßig durch die Schwerkraft bedingt zur Horizontalen räumlich geneigte sich verändernde Oberflächenabschnitte aufweist. So kann über den auf dem Haufwerk sich bewegenden Entnahmekopf, der entsprechend der Neigung der betreffenden Fläche des Haufwerks ausgerichtet ist, die Neigung des Haufwerkabschnitts festgestellt und die Bewegung des Entnahmekopfs darauf abgestimmt werden. Mit dem Neigungssensor kann die Topologie des Haufwerks erfasst werden und diese der Steuerung zur gezielten Bewegungsführung des Entnahmekopfes bereitgestellt werden, zum Beispiel in Richtung eines Gradienten, um ein als Hügel geformtes Haufwerk effektiv abtragen zu können. Beispielsweise kann der Entnahmekopf bezogen auf eine Höhe des Lagers abwechselnd aufsteigend und abfallend bewegt werden.

Eine vorteilhafte Ausgestaltung des Erfindungsgegenstandes zeichnet sich dadurch aus, dass ein Sensor zur Detektion eines Gegenstandes vorgesehen ist. Beispielsweise kann wenigstens ein Abstandsensor und/oder wenigstens ein Berührungssensor vorgesehen sein. Damit lassen sich Abstände zum Beispiel zwischen dem Entnahmekopf und einem Gegenstand im Lager bzw. das Erreichen des Gegenstandes durch den Entnahmekopf detektieren.

Mit dem Sensor kann zum Beispiel eine Wand des Lagers oder können andere Einrichtungen innerhalb des Lagers erfasst werden. Vor oder mit dem Erreichen des Gegenstandes kann bei einer entsprechend darauf abgestimmten Steuerung insbesondere ein Abstoppen bzw. Verlangsamen der Bewegung des Entnahmekopfes und/oder ein Richtungswechsel der angetriebenen Bewegung des Entnahmekopfes eingeleitet werden. Gegebenenfalls kann es eingerichtet werden, dass eine Kollision des sich bewegenden Entnahmekopfes mit einem Gegenstand, was Beschädigungen verursachen kann, sicher ausgeschlossen wird.

Insbesondere kann es auch vorteilhaft sein, über den Sensor eine eindeutig festgelegte räumliche Position des Entnahmekopfs im Volumen des Lagers zumindest in zeitlichen Abständen festzustellen. Mit der Zusatzinformation, dass der Entnahmekopf sich im Wesentlichen nur auf einer Oberfläche des Schüttgutes bewegt, kann zudem immer aktuell ein gesamtes Schüttgutvolumen innerhalb des Lagers ausreichend genau abgeschätzt werden. Die Bestimmung der räumlichen Position des Entnahmekopfs im Volumen des Lagers kann beispielsweise mit Hilfe eines Positionssensors bzw. einer Positionsbestimmungseinrichtung erfolgen, beispielsweise auf Basis der GPS-Technik.

Es kann auch ausreichend sein, wenn ein Sensor vorgesehen ist, der zur Erkennung lediglich einer Raumrichtung ausgestaltet ist. Denkbar hierzu ist ein Kompass oder ein GPS-Modul. Damit ist nicht die exakte Position des Entnahmekopfs im Raum erfassbar, jedoch die Richtung zum Beispiel einer Bewegung des Entnahmekopfs in einer Ebene im Raum.

Außerdem bevorzugt ist es, wenn Mittel vorgesehen sind, mit denen die Leistungsaufnahme der Fahrantriebe als Eingangssignal zur Richtungssteuerung einer Bewegung des Entnahmekopfs verwendet wird. Bei unterschiedlichen Leistungsaufnahmen der Fahrantriebe ist davon auszugehen, däss eine Bewegungsrichtung bevorzugt wird. Denkbar ist eine Bestimmung von Leistungsaufnahmewerten, die dann am Fahrantrieb vorgegeben werden, eine vorgegebene Bewegung des Entnahmekopfs zu erreichen.

Im Weiteren ist es vorteilhaft, wenn ein Sensor vorgesehen ist, mit welchem eine Erkennung vorgegebener Schüttguteigenschaften, zum Beispiel deren Temperatur ermöglicht ist.

Damit ist es möglich, in einem Pelletlager ein Füllvolumen durch Pellets im Lager insbesondere während der Bewegung des Entnahmekopfes festzustellen.

Die Sensormittel können auch einen Sensor für die Erfassung eines Förderstromes bzw. -volumens des Schüttgutes mit dem Entnahmekopf zur Überwachung der Förderung umfassen. Damit lassen sich Sicherheitsstandards erfüllen bzw. Betriebszustände vermeiden, in denen trotz arbeitenden Fördermitteln kein oder zu wenig Schüttgut an die Lieferstelle gelangt.

Beispielsweise ist es einrichtbar, dass eine herrschende Bewegungsrichtung des Entnahmekopfes beibehalten wird, falls kein Schüttgutmaterial gefördert wird bzw. die Förderleistung zu gering ist.

Auch ist es vorteilhaft, dass die Steuermittel zur Ansteuerung der Antriebselemente dazu ausgelegt sind, eine Umkehr einer Drehrichtung nach einem vorgegebenen Muster durchzuführen. Das vorgegebene Muster kann neben anderen Mustern auf dem Zufallsprinzip basieren.

Mit dem Muster kann alternativ zum Zufallsprinzip auch ein genau vorgebbarer Ablaufplan für nacheinander folgende unterschiedliche Drehrichtungen bzw. Aktionen für jede einzelne Antriebseinheit eingerichtet sein. Beispielsweise kann ein Durchpermutieren der Drehrichtungen im Laufe des Betriebs erfolgen. Dabei kann ggf. zusätzlich auch die Drehzahl angepasst bzw. verändert werden.

Die vorgeschlagenen Steuermittel erlauben es auch, Betriebszustände einzurichten, welche sowohl zufällig generierte Aktionen als auch gezielt vorgegebene Aktionen in einem vorgegebenen Muster umfassen.

Des Weiteren ist es vorteilhaft, dass die Steuermittel zur Ansteuerung der Antriebselemente dazu ausgelegt sind, abhängig von einem Sensorsignal eine Drehrichtung zu ändern. Das Sensorsignal kann zum Beispiel von einem Neigungssensor stammen, womit eine Information bereitgestellt wird, ob die Bewegung des Entnahmekopfs bergauf, bergab oder horizontal stattfindet. Entsprechend kann ein Sensorsignal eines Berührungssensors weiterverarbeitet werden. Der Berührungssensor kann beispielsweise mitteilen, wann eine Berührung stattfindet, wodurch dann z. B. eine Bewegung des Entnahmekopfs in eine zur Berührungsseite entgegengesetzte Seite eingeleitet wird.

Auch ist es vorteilhaft, dass die Steuermittel zur Ansteuerung der Antriebselemente so ausgebildet sind, dass die Art der Ansteuerung der Antriebselemente nach einer Priorisierung abläuft.

So kann es zum Beispiel vorgesehen sein, zuerst bzw. mit höchster Priorität eine Bewegung bzw. Bewegungssteuerung nach dem Zufallsprinzip auszuführen, bzw. wenn z. B. phasenweise nicht nach dem Zufallsprinzip gearbeitet wird, mit einer niedrigeren Priorität die Auswertung von Sensorsignalen als Grundlage der Bewegungssteuerung heranzuziehen oder umgekehrt.

Eine vorteilhafte Variante der erfindungsgemäßen Entnahmevorrichtung betrifft die Steuermittel zur Ansteuerung der Antriebselemente und gegebenenfalls die Antriebselemente, die derart ausgestaltet sind, dass eine kontrollierte Dosierung von Schüttgut in ein Saugrohr am Entnahmekopf einstellbar ist. Damit lässt sich ohne größere zusätzliche Maßnahmen die Dosierung des zu entnehmenden Schüttgutes entsprechend eines gewünschten Entnahmestroms bzw. -volumens anpassen.

Beispielsweise wird aufgrund der angetriebenen Bewegung der Antriebelemente Schüttgut aufgewirbelt bzw. aufgelockert und einem Ansaugbereich der Fördervorrichtung zugeführt, womit abhängig von Drehzahl- und/oder Drehrichtung die geförderte Schüttgutmenge beeinflussbar ist.

Gemäß einer weiteren vorteilhaften Ausbildung der Erfindung sind die Steuermittel zur Ansteuerung der Antriebselemente und gegebenenfalls die Antriebselemente derart ausgestaltet, dass der Entnahmekopf sich in ein Haufwerk eingraben und/oder aus diesem ausgraben kann.

Damit kann die Entnahme von in einem Haufwerk vorgelegtem Schüttgut an dessen Oberfläche und/oder aus einem inneren Volumen erfolgen, was eine sehr variable Entnahmestrategie ermöglicht.

Es ist zudem nicht ausgeschlossen, dass der sich bewegende oder stillstehende Entnahmekopf zum Einfüllen von Schüttgut in das Lager fähig ist, beispielsweise durch eine Umkehr einer Förderrichtung des Förderaggregats, mit welchem das Schüttgut im Regelbetrieb über den Entnahmekopf aus dem Lager heraus gefördert wird.

Die Erfindung betrifft außerdem ein Lager mit einer Entnahmevorrichtung der oben beschriebenen Ausgestaltung.

Damit lässt sich ein Lager mit einem Schüttgut, beispielsweise ein Pelletschüttgutlager mit den oben genannten Vorteilen bereitstellen. Als Lager eignen sich nahezu alle bekannten Lagerarten für Schüttgut wie z. B. Maulwurftank, Erdspeicher oder vorbereiteter Kellerraum, wobei vorteilhafterweise das Lager ohne vorbereitetet Schrägen auskommt, womit bei gleicher Grundfläche mehr Lagervolumen zur Verfügung steht.

### Figurenbeschreibung:

Weitere Vorteile und Merkmale der Erfindung sind anhand eines in den Figuren dargestellten Ausführungsbeispiels der Erfindung näher erläutert.

Im Einzelnen zeigt:

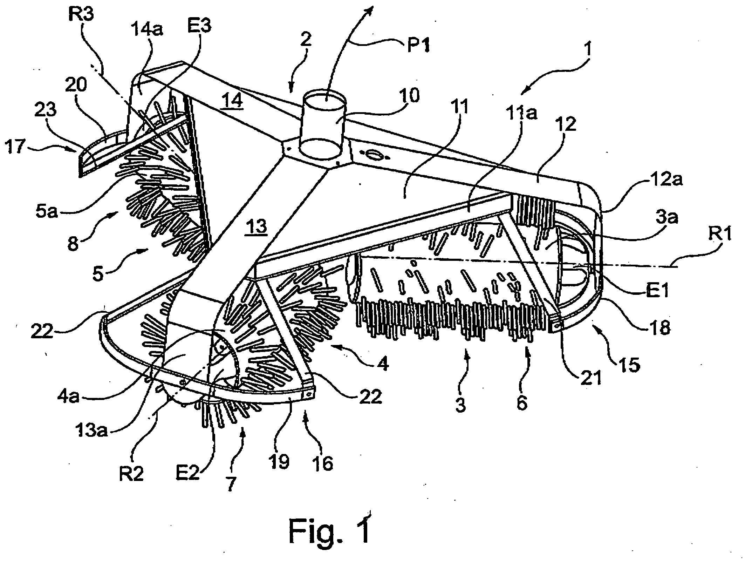

- Figur 1: einen Teil einer bevorzugten erfindungsgemäßen Entnahmevorrichtung für ein Lager für Schüttgut mit einem Entnahmekopf und Verfahrmittel zum Bewegen des Entnahmekopfs in perspektivischer Ansicht schräg von oben,
- Figur 2: die Anordnung gemäß Figur 1 in einer Ansicht von oben und
- Figur 3: die Anordnung gemäß Figur 1 in einer Ansicht von unten.

Die erfindungsgemäße Entnahmevorrichtung 1, welche im Betrieb im Innern eines mit Schüttgut beaufschlagbaren Lagers positionierbar ist, weist einen Entnahmekopf 2 und Verfahrmittel zum Bewegen des Entnahmekopfs 2 auf. Die Verfahrmittel umfassen drei Antriebswalzen 3, 4 und 5. Dabei ist jede der Antriebswalzen 3 bis 5 jeweils über eine als Elektromotor E1, E2 und E3 ausgebildete Antriebseinheit separat antreibbar. Außerdem ist jeder Elektromotor E1, E2 und E3 und damit jede Antriebswalze 3 bis 5 separat ansteuerbar über eine übergeordnete Einheit beispielsweise eine nicht dargestellte Steuereinheit.

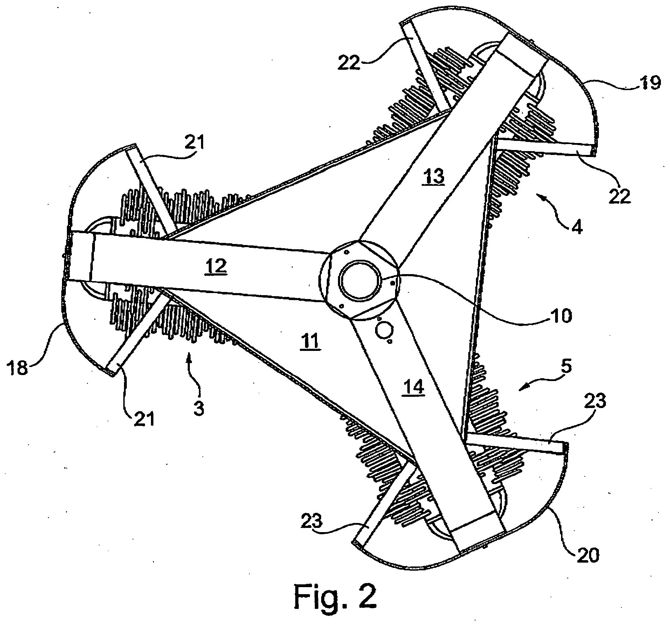

Die Antriebswalzen 3 bis 5 rotieren angetrieben um Rotationsachsen R1 bis R3, was über die Elektromotoren E1, E2 und E3 erfolgt. Im gezeigten Ausführungsbeispiel liegen die Antriebsachsen R1 bis R3 sternförmig in einer Ebene und schneiden sich in einem gemeinsamen zentralen Punkt des Entnahmekopfs 2. Die Antriebsachsen R1 bis R3 sind hier beispielhaft in der Draufsicht gemäß Figur 2 voneinander gleichmäßig mit einem Winkel von 120 Winkelgraden versetzt zueinander.

Die Antriebswalzen 3 bis 5 sind hier beispielhaft untereinander gleichartig und jeweils als Bürstenwalzen ausgebildet, wobei jeweils an einem zylindrischen Grundkörper 3a, 4a bzw. 5a der Antriebswalzen 3 bis 5 Strukturmittel mit radial nach außen abstehenden etwas flexiblen Stiftelementen 6, 7 bzw. 8, welche alle die gleiche Lange aufweisen, vorhanden sind. Über die im Betrieb mit dem Schüttgut in Kontakt befindlichen Stiftelemente 6 bis 8 findet bei rotierend angetriebenen Antriebswalzen 3 bis 5 eine Drehmomentübertragung auf den Entnahmekopf 2 statt. Je nach Drehrichtung und/oder Drehzahl der einzelnen Antriebswalzen 3 bis 5 wird der Entnahmekopf 2 auf bzw. im Schüttgut räumlich in eine steuerbare bzw. vorgebbare Richtung bewegt.

Die Art, Form bzw. Abmessung der Strukturmittel, die eine Oberflächenstruktur an den Antriebswalzen 3 bis 5 bilden, kann stark variieren und abhängig vom betreffenden Schüttgut ausgebildet sein. Beispielsweise kann alternativ eine Rippung oder eine Lamellenanordnung außen an den Antriebswalzen 3 bis 5 oder anderen Antriebselementen vorhanden sein.

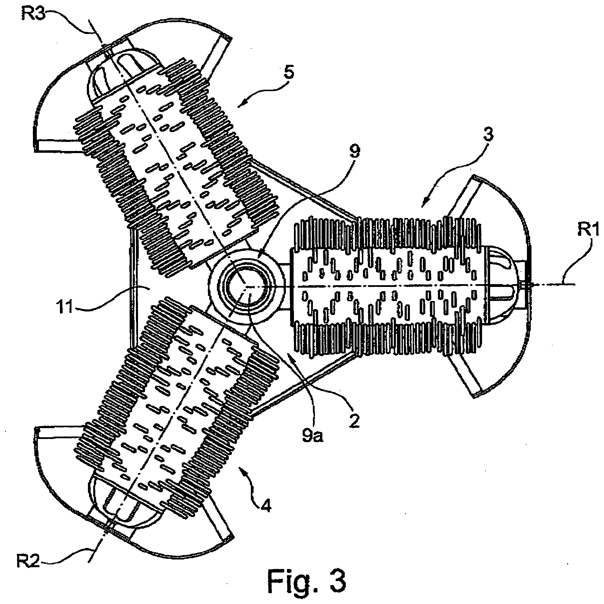

Der Entnahmekopf 2 weist unterseitig gemäß Figur 3 einen Ansaugstutzen 9 mit einer zylindrischen Ansaugöffnung 9a zum Ansaugen von Schüttgut auf, das sich im Betrieb des Entnahmekopfes 2 im Ansaugbereich bzw. unterhalb des Ansaugstutzens 9 befindet, wobei das Schüttgut von den angetrieben rotierenden Antriebswalzen 3 bis 5 aufgelockert wird, womit ein Ansaugen des Schüttguts durch die Ansaugöffnung 9a erleichtert wird. Der Ansaugstutzen 9 verlängert sich hierfür über einen festen Rohrabschnitt 10 des Entnahmekopfes 2 über eine daran anschließende und dicht verbundene nicht gezeigte beispielsweise flexible Saugleitung zum Ableiten des abgesaugten Schüttgutmaterials an einen Zielort außerhalb des Schüttgutlagers.

Abdeckend über den drei Antriebswalzen 3 bis 5 ist ein in der Grundform angenähert dreieckförmiges Abdeckblech 11 vorhanden, welches randseitig einen nach unten umgebogenen Rand 11a aufweist und das im Bereich der aufeinander zulaufenden Seiten abgeflacht ist. Oberhalb des vom Rohrabschnitt 10 durchgriffenen Abdeckblechs 11 verlaufen drei am Randabschnitt 10 angreifende streifenförmige Aufnahmestege 12, 13 und 14 sternförmig vom Rohrabschnitt 10 schräg nach außen und reichen über das Abdeckblechs 11 etwas über. Jeder Aufnahmesteg 12 bis 14 ist an seinem vorderen Ende nach unten umgebogen und geht in einen vorne abgerundeten Endabschnitt 12a, 13a bzw. 14a über.

An den Endabschnitten 12a, 13a und 14a findet die Aufnahme bzw. Lagerung einer Stirnseite des jeweiligen Elektromotors E1, E2 bzw. E3 und damit der Antriebswalzen 3 bis 5 statt. Die Elektromotoren E1 bis E3 sind im Wesentlichen innerhalb der Grundkörper 3a, 4a und 5a der Antriebswalzen 3 bis 5 untergebracht.

Außerdem ist zur Stabilisierung der jeweiligen Lagerstelle der Antriebswalzen 3 bis 5 bzw. der Elektromotoren E1 bis E3 an jedem Endabschnitt 12a, 13a und 14a eine bügelartige Haltestruktur 15, 16, 17 vorhanden. Jede Haltestruktur 15 bis 17 umfasst einen etwas gebogenen streifenförmigen Bügel 18, 19 bzw. 20, der auf halber Länge an dem dazugehörigen Endabschnitt 12a, 13a und 14a fixiert ist. Die Bügel 18 bis 20 sind jeweils über zwei streifenförmige Stützstreben 21, 22 bzw. 23, die an beiden Enden der Bügel 18 bis 20 angreifen, mit dem Abdeckblech 11 verbunden.

Der Entnahmekopf 2 umfasst einen Neigungsmesser und beispielsweise einen Abstandssensor und/oder einen Positionserfassungssensor, wobei die Sensormittel nicht dargestellt sind. Die Sensormittel können beispielsweise im Bereich des Abdeckblechs 11, der Aufnahmestege 12 bis 14 bzw. der Haltestrukturen 15 bis 17 vorhanden sein. Verbindungs- bzw. Versorgungsleitungen für eine Kommunikation mit einer Steuereinrichtung zum Beispiel für die Elektromotoren E1 bis E3 und der Sensormittel sind in den Figuren ebenfalls nicht gezeigt.

In einer entsprechend vorgegebenen Betriebsphase können beispielsweise zwei der drei Antriebswalzen 3 bis 5 in eine Richtung rotieren, wohingegen die dritte Antriebswalze abwechselnd in zeitlich vorgebbaren Abständen die Drehrichtung wechselt.

### Bezugszeichenliste:

- 1: Entnahmevorrichtung
- 2: Entnahmekopf
- 3, 4, 5: Antriebswalzen
- 3a, 4a, 5a: Grundkörper
- 6, 7, 8: Stiftelement
- 9: Ansaugstutzen
- 9a: Ansaugöffnung
- 10: Rohrabschnitt
- 11: Abdeckblech
- 11a: Rand
- 12, 13, 14: Aufnahmesteg
- 12a, 13a, 14a: Endabschnitt
- 15, 16, 17: Haltestruktur
- 18, 19, 20: Bügel
- 21, 22, 23: Stützstreben

## Patentansprüche

1. Entnahmevorrichtung (1) für ein Lager für Schüttgut, insbesondere Holzpellets, mit einem Entnahmekopf (2) und Verfahrmittel zum Bewegen des Entnahmekopfs (2), wobei mehrere unabhängig antreib- und ansteuerbare Antriebselemente (3-5) zum Bewegen des Entnahmekopfs (2) vorgesehen sind, **dadurch gekennzeichnet, dass** Steuermittel zur Ansteuerung der Antriebselemente (3-5) vorgesehen sind und dass ein Neigungsmesser im Bereich des Entnahmekopfs (2) vorgesehen ist, welcher die Neigung eines Haufwerkabschnitts des Schüttgutlagers feststellt, wobei die Steuermittel dazu ausgelegt sind, eine Bewegung des Entnahmekopfs (2) auf die festgestellte Neigung des Haufwerkabschnitts abzustimmen.

2. Entnahmevorrichtung (1) nach Anspruch 1, **dadurch gekennzeichnet, dass** eine Drehrichtung der Antriebselemente (3-5) änderbar ist.

3. Entnahmevorrichtung (1) nach einem der vorhergehenden Ansprüche, **dadurch gekennzeichnet, dass** die Antriebselemente (3-5) sich unterscheidende Drehachsen (R1-R3) aufweisen.

4. Entnahmevorrichtung (1) nach einem der vorhergehenden Ansprüche, **dadurch gekennzeichnet, dass** jedes Antriebselement (3-5) einen eigenen Antrieb (E1-E3) besitzt.

5. Entnahmevorrichtung (1) nach einem der vorhergehenden Ansprüche, **dadurch gekennzeichnet, dass** die Antriebselemente (3-5) wenigstens eine längliche Antriebswalze umfassen.

6. Entnahmevorrichtung (1) nach einem der vorhergehenden Ansprüche, **dadurch gekennzeichnet, dass** eine Saugvorrichtung vorgesehen ist, die in Bezug auf den Entnahmekopf (2) selbst zur Regulierung einer Saugleistung bewegbar ausgestaltet ist.

7. Entnahmevorrichtung (1) nach einem der vorhergehenden Ansprüche, **dadurch gekennzeichnet, dass** ein Sensor zur Detektion eines Gegenstands vorgesehen ist.

8. Entnahmevorrichtung (1) nach einem der vorhergehenden Ansprüche 2-7, **dadurch gekennzeichnet, dass** die Steuermittel zur Ansteuerung der Antriebselemente (3-5) dazu ausgelegt sind, eine Umkehr einer Drehrichtung nach einem vorgegebenen Muster durchzuführen.

9. Entnahmevorrichtung (1) nach einem der vorhergehenden Ansprüche 2-8, **dadurch gekennzeichnet, dass** die Steuermittel zur Ansteuerung der Antriebselemente (3-5) dazu ausgelegt sind, abhängig von einem Sensorsignal eine Drehrichtung zu ändern.

10. Entnahmevorrichtung (1) nach einem der vorhergehenden Ansprüche, **dadurch gekennzeichnet, dass** die Steuermittel zur Ansteuerung der Antriebselemente (3-5) so ausgebildet sind, dass die Art der Ansteuerung der Antriebselemente (3-5) nach einer Priorisierung abläuft.

11. Entnahmevorrichtung (1) nach einem der vorhergehenden Ansprüche, **dadurch gekennzeichnet, dass** die Steuermittel zur Ansteuerung der Antriebselemente (3-5) und gegebenenfalls die Antriebselemente derart ausgestaltet sind, dass eine kontrollierte Dosierung von Schüttgut in ein Saugrohr (10) am Entnahmekopf (2) einstellbar ist.

12. Entnahmevorrichtung (1) nach einem der vorhergehenden Ansprüche, **dadurch gekennzeichnet, dass** die Steuermittel zur Ansteuerung der Antriebselemente (3-5) und gegebenenfalls die Antriebselemente derart ausgestaltet sind, dass der Entnahmekopf (2) sich in das Haufwerk eingraben und/oder aus diesem ausgraben kann.

13. Lager mit einer Entnahmevorrichtung (1) nach einem der vorhergehenden Ansprüche.

## Claims

1. Retrieval device (1) for a storage facility for bulk material, in particular wood pellets, comprising a retrieval head (2) and travel means for moving the retrieval head (2), wherein a plurality of independently driveable and controllable drive elements (3 - 5) are provided for moving the retrieval head (2), **characterised in that** control means are provided for controlling the drive elements (3 - 5) and **in that** an inclinometer is provided in the area of the retrieval head (2) which determines the inclination of a section of aggregate material of the bulk material storage facility, wherein the control means are configured to adjust a movement of the retrieval head (2) to the established inclination of the section of aggregate material.

2. Retrieval device (1) according to claim 1, **characterised in that** a direction of rotation of the drive elements (3 - 5) can be changed.

3. Retrieval device (1) according to any of the preceding claims, **characterised in that** the drive elements (3 - 5) have different axes of rotation (R1 - R3).

4. Retrieval device (1) according to any of the preceding claims, **characterised in that** each drive element (3 - 5) has a separate drive (E1 - E3).

5. Retrieval device (1) according to any of the preceding claims, **characterised in that** the drive elements (3 - 5) comprise at least one elongated drive roller.

6. Retrieval device (1) according to any of the preceding claims, **characterised in that** a suction device is provided which is configured to be movable relative to the retrieval head (2) itself for regulating the suction capacity.

7. Retrieval device (1) according to any of the preceding claims, **characterised in that** a sensor is provided for detecting an object.

8. Retrieval device (1) according to any of the preceding claims 2 - 7, **characterised in that** the control means for controlling the drive elements (3 - 5) are configured to reverse a direction of rotation according to a predefined pattern.

9. Retrieval device (1) according to any of the preceding claims 2 - 8, **characterised in that** the control means for controlling the drive elements (3 - 5) are designed to change a direction of rotation depending on a sensor signal.

10. Retrieval device (1) according to any of the preceding claims, **characterised in that** the control means for controlling the drive elements (3 - 5) are designed so that the drive elements (3 - 5) are controlled according to a prioritisation system.

11. Retrieval device (1) according to any of the preceding claims, **characterised in that** the control means are configured for controlling the drive elements (3 - 5) and if necessary the drive elements are configured such that a controlled metering of bulk material into a suction pipe (10) can be adjusted at the retrieval head (2).

12. Retrieval device (1) according to any of the preceding claims, **characterised in that** the control means for controlling the drive elements (3 - 5) and if necessary the drive elements are configured such that the retrieval head (2) can dig itself into the aggregate material and/or dig itself out of the latter.

13. Storage facility with a retrieval device (1) according to any of the preceding claims.

## Revendications

1. Dispositif de prélèvement (1) pour un dépôt de matériau en vrac, en particulier des granulés de bois, avec une tête de prélèvement (2) et des moyens de déplacement pour déplacer la tête de prélèvement (2), plusieurs éléments d'entraînement (3-5) pouvant être entraîné et commandés indépendamment les uns des autres étant prévus pour déplacer la tête de prélèvement (2), **caractérisé en ce que** des moyens de commande sont prévus pour commander les éléments d'entraînement (3-5), et **en ce qu'**un capteur d'inclinaison est prévu au niveau de la tête de prélèvement (2), lequel détermine l'inclinaison d'une partie du tas du dépôt de produit en vrac, les moyens de commande étant conçus pour adapter un mouvement de la tête de prélèvement (2) en fonction de l'inclinaison déterminée de la partie du tas.

2. Dispositif de prélèvement (1) selon la revendication 1, **caractérisé en ce qu'**une direction de rotation des éléments d'entraînement (3-5) peut être modifiée.

3. Dispositif de prélèvement (1) selon l'une des revendications précédentes, **caractérisé en ce que** les éléments d'entraînement (3-5) présentent des axes de rotation (R1-R3) différents.

4. Dispositif de prélèvement (1) selon l'une des revendications précédentes, **caractérisé en ce que** chaque élément d'entraînement (3-5) possède un entraînement (E1-E3) propre.

5. Dispositif de prélèvement (1) selon l'une des revendications précédentes, **caractérisé en ce que** les éléments d'entraînement (3-5) comprennent au moins un rouleau d'entraînement longiforme.

6. Dispositif de prélèvement (1) selon l'une des revendications précédentes, **caractérisé en ce qu'**il est prévu un dispositif d'aspiration qui est conçu mobile par rapport à la tête de prélèvement (2) elle-même pour réguler une puissance d'aspiration.

7. Dispositif de prélèvement (1) selon l'une des revendications précédentes, **caractérisé en ce qu'**un capteur est prévu pour détecter une résistance.

8. Dispositif de prélèvement (1) selon l'une des revendications 2 à 7, **caractérisé en ce que** les moyens de commande pour commander les éléments d'entraînement (3-5) sont conçus pour réaliser une inversion de la direction de rotation selon un schéma préétabli.

9. Dispositif de prélèvement (1) selon l'une des revendications 2 à 8, **caractérisé en ce que** les moyens de commande pour commander les éléments d'entraînement (3-5) sont conçus pour modifier une direction de rotation en fonction d'un signal de capteur.

10. Dispositif de prélèvement (1) selon l'une des revendications précédentes, **caractérisé en ce que** les moyens de commande pour commander les éléments d'entraînement (3-5) sont conçus de telle sorte que le mode de commande des éléments d'entraînement (3-5) se déroule selon une hiérarchisation.

11. Dispositif de prélèvement (1) selon l'une des revendications précédentes, **caractérisé en ce que** les moyens de commande pour commander les éléments d'entraînement (3-5) et le cas échéant les éléments d'entraînement, sont conçus de telle sorte qu'il est possible de régler un dosage contrôlé du matériau en vrac dans un tuyau d'aspiration (10) sur la tête de prélèvement (2).

12. Dispositif de prélèvement (1) selon l'une des revendications précédentes, **caractérisé en ce que** les moyens de commande pour commander les éléments d'entraînement (3-5) et le cas échéant les éléments de commande sont conçus de telle sorte que la tête de prélèvement (2) peut s'enfoncer dans le tas et/ou ressortir de celui-ci.

13. Dépôt avec un dispositif de prélèvement (1) selon l'une des revendications précédentes.
